# FASCICULE DE BREVET EUROPEEN

(11) **EP 3 814 175 B1**
(45) Date de publication et mention de la délivrance du brevet: **20.07.2022**
(21) Numéro de dépôt: 19734791.7
(22) Date de dépôt: 28.06.2019
(51) Int. Cl.: B60R 16/033

(54) **SYSTEME ELECTRIQUE NOTAMMENT POUR VEHICULE AUTOMOBILE**
ELEKTRISCHES SYSTEM, INSBESONDERE FÜR EIN KRAFTFAHRZEUG
ELECTRICAL SYSTEM PARTICULARLY FOR A MOTOR VEHICLE

(30) Priorité: 28.06.2018 FR 1855909
(43) Date de publication de la demande: 05.05.2021
(73) Titulaire: VALEO EQUIPEMENTS ELECTRIQUES MOTEUR, 94046 Créteil Cedex (FR)
(72) Inventeur: DOMENGER, Laurent, 94046 CRETEIL CEDEX (FR); IHADDADEN, Hafid, 94046 CRETEIL CEDEX (FR); FILIPE, Raphael, 94046 CRETEIL CEDEX (FR)
(74) Mandataire: Valeo Powertrain Systems
(86) Numéro de dépôt international: PCT/EP2019/067466
(87) Numéro de publication internationale: WO 2020/002672

(56) Documents cités:
- EP-A1- 3 264 551
- EP-A2- 2 827 481
- FR-A1- 2 977 739
- US-A1- 2011 264 326
- US-B1- 6 405 330

## Description

La présente invention concerne un système électrique, notamment pour véhicule automobile.

En particulier, l'invention se rapporte aux machines électriques tournantes équipées de systèmes électroniques intégrés. En effet, il existe de plus en plus, notamment dans les véhicules automobiles, des dispositifs électroniques dit haute tension, par exemple 48 volts. Ce type de dispositif haute tension est couramment amené à être connecté à un ou plusieurs capteurs alimentés en basse tension, typiquement 12 volts.

Ainsi, de plus en plus dans les dispositifs électroniques des véhicules automobiles, coexistent une partie basse tension, typiquement reliée à un circuit alimenté par une tension de 12 volts du véhicule, et une partie haute tension, typiquement reliée à un circuit alimenté par une tension de 48 volts ou plus.

Dans ce cas, la norme dite « LV148 » impose de maintenir une tension de 70 Volts pour un courant de fuite inférieur à 1 µA entre les deux masses d'un circuit à basse tension, typiquement 12 V et d'un circuit à haute tension, typiquement 48 V.

Il est connu, d'utiliser une isolation galvanique pour les signaux analogiques et numériques afin de respecter cette exigence.

Néanmoins, ce type d'isolation est relativement coûteux.

Ainsi, l'invention propose de fournir un système électrique permettant de remédier à ce problème.

À cet effet, la présente invention a pour objet un système électrique notamment pour véhicule automobile, comprenant :
- un premier circuit électrique ayant une première masse et alimenté par une première tension au niveau d'une première borne d'alimentation,
- un deuxième circuit électrique ayant une deuxième masse distincte de la première masse et alimenté par une deuxième tension différente de la première tension au niveau d'une deuxième borne d'alimentation,
- un élément capacitif reliant un point de premier potentiel du premier circuit électrique à un point de deuxième potentiel du deuxième circuit électrique.

En d'autres termes, l'élément capacitif est placé entre deux points dont le potentiel, i.e. la tension, est différente.

Avantageusement, un tel système électrique permet de supprimer l'isolation galvanique généralement utilisée, de la remplacer par une isolation capacitive, et ainsi de réduire les coûts de production, notamment, dans le cadre de la mesure de température dans le système électrique.

Le système électrique selon l'invention peut également comprendre une ou plusieurs des caractéristiques ci-dessous, considérées individuellement ou selon toutes les combinaisons techniquement possibles :
- le courant de fuite mesuré entre le premier circuit et le deuxième circuit est inférieur à 1µA en application d'une tension sensiblement égale ou égale à 70V entre la première masse reliée à la première borne d'alimentation du premier circuit 12 et la deuxième masse reliée à la deuxième borne d'alimentation du deuxième circuit 14 ; et/ou
- la deuxième tension est supérieure ou égale à la première tension ; et/ou
- la première tension est comprise entre 3V et 40V et la deuxième tension est comprise entre 20V et 70V ; et/ou
- l'élément capacitif à une capacité comprise entre 1 et 4,7 µF ; et/ou
- le système électrique comprend en outre une résistance variable en fonction de la température, ladite résistance variable étant placée en série entre l'élément capacitif et la deuxième masse ; et/ou
- le système électrique comprend en outre un dispositif de mesure de température, le dispositif de mesure de température comprenant : un générateur de tension, un dispositif d'acquisition, une unité de calcul et une première résistante ayant une première borne électrique connectée à une borne du générateur de tension et une seconde borne électrique connectée au point de premier potentiel du premier circuit électrique, dans lequel :
   o le générateur de tension est configuré pour émettre un signal périodique sur la première borne de la première résistance,
   o le dispositif d'acquisition est configuré pour échantillonner périodiquement le potentiel présent sur une borne d'entrée, ladite borne d'entrée étant connectée au point de premier potentiel du premier circuit électrique, et
   o l'unité de calcul est configurée pour estimer la température à partir des échantillons acquis par le dispositif d'acquisition ;
      et/ou
- Le signal périodique émis sur la première borne de la première résistance est une tension périodique; et/ou
- Le potentiel présent sur la borne d'entrée du dispositif d'acquisition est une tension; et/ou
- dans le système électrique, lorsque le système électrique est en fonctionnement, la première masse du premier circuit électrique est connectée électriquement à la deuxième masse du deuxième circuit électrique, de préférence uniquement par un câble électrique ; et/ou
- le générateur de tension est configuré pour émettre un signal carré ; et/ou
- le générateur de tension est configuré pour émettre un signal ayant un rapport cyclique supérieur ou égal à 40% et inférieur ou égal à 60% ; et/ou
- le dispositif de mesure de température comprend en outre un dispositif de filtrage arrangé et configuré pour filtrer le potentiel présent au point de premier potentiel du premier circuit électrique avant son échantillonnage par le dispositif d'acquisition, ledit dispositif de filtrage comprenant :
   o une deuxième résistance connectée entre le point de premier potentiel du premier circuit électrique et la borne d'entrée du dispositif d'acquisition,
   o une première capacité de filtrage et un premier interrupteur connectées en série, l'association en série desdites première capacité de filtrage et premier interrupteur étant placée en parallèle entre la borne d'entrée du dispositif d'acquisition et la première masse,
   o une deuxième capacité de filtrage et un deuxième interrupteur connectées en série, l'association en série desdites deuxième capacité de filtrage et deuxième interrupteur étant placée en parallèle entre la borne d'entrée du dispositif d'acquisition et la première masse,
   o l'état ouvert ou fermé desdits premier et deuxième interrupteurs étant commandé par le signal carré émis par le générateur de tension, le premier interrupteur étant ouvert lorsque le deuxième interrupteur est fermé, et vice-versa.

D'autres caractéristiques et avantages de l'invention apparaîtront à la lecture de la description détaillée de modes de réalisation donnés à titre d'exemples non limitatifs et illustrés, accompagnée des figures suivantes :
- la figure 1 représente un schéma électrique d'un premier mode de réalisation selon l'invention ;
- la figure 2 illustre des chronogrammes illustrant le fonctionnement du système électrique de la figure 1 ;
- la figure 3 représente un schéma électrique d'un second mode de réalisation selon l'invention ;
- la figure 4 illustre des chronogrammes illustrant l'existence de bruit entre la première masse et la deuxième masse et illustrant l'influence de ce bruit sur le fonctionnement du système électrique de la figure 1 ; et
- la figure 5 illustre des chronogrammes illustrant le fonctionnement du dispositif de filtrage du système électrique de la figure 3

Sur les figures, les éléments analogues sont désignés par des références identiques. En outre, les différents éléments ne sont pas nécessairement représentés à l'échelle afin de présenter une vue permettant de faciliter la compréhension de l'invention.

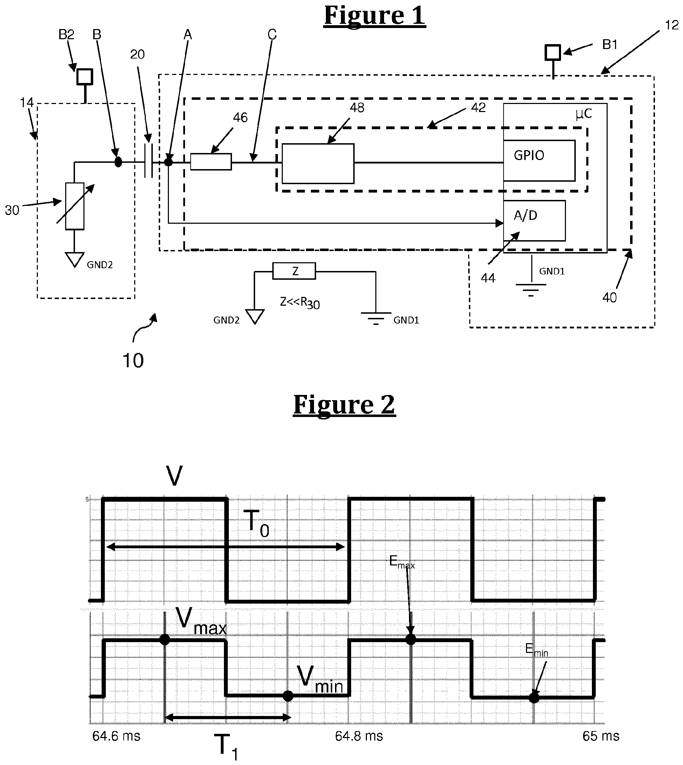

Les figures 1 et 2 illustrent un premier mode de réalisation d'un système électrique selon l'invention, notamment pour véhicule automobile.

Le système électrique 10 comprend un premier circuit électrique 12 ayant une première masse GND1 et alimenté par une première tension V1 au niveau d'une première borne d'alimentation B1.

En outre, le système électrique 10 comprend un deuxième circuit électrique 14 ayant une deuxième masse GND2 et alimenté par une deuxième tension V2 au niveau d'une deuxième borne d'alimentation B2.

La première masse GND1 du premier circuit 12 est distincte de la deuxième masse GND2 du deuxième circuit 14.

En outre, la deuxième tension est différente de la première tension. Par exemple, la deuxième tension V2 est supérieure ou égale à la première tension V1.

De préférence, la première tension V1 est comprise entre 3V et 40V et la deuxième tension V2 est comprise entre 20V et 70V. Dans les exemples illustrés sur les figures, la première tension V1 est de l'ordre 12 V et la deuxième tension V2 est de l'ordre de 48 V.

Selon l'invention, le système électrique comporte avantageusement un élément capacitif 20 reliant un point, noté A, de premier potentiel du premier circuit électrique 12 à un point, noté B, de deuxième potentiel du deuxième circuit électrique 14.

De préférence, l'élément capacitif 20 a une capacité comprise entre 1 et 4,7 µF et de préférence entre 1 et 2,2 µF. Ce dimensionnement particulier de l'élément capacitif 20 permet de garantir que le courant de fuite mesuré entre la première masse du premier circuit 12 et la deuxième masse du deuxième circuit 14 est inférieur à 1 µA en application d'une tension sensiblement égale à 70V entre la première masse reliée à la première borne du premier circuit 12 et la deuxième masse reliée à la deuxième borne du deuxième circuit 14. Ainsi, le système électrique 10 est conforme au test E48-20 de la norme LV148.

Le courant de fuite d'une tel système électrique peut en outre être aisément mesuré par un procédé de mesure, dans lequel le courant de fuite est mesuré entre le premier circuit électrique 12 et le deuxième circuit électrique 14 après l'application d'une tension sensiblement égale à 70V entre la première masse reliée à la première borne du premier circuit 12 et la deuxième masse reliée à la deuxième borne du deuxième circuit 14. En outre, le système électrique comporte avantageusement une résistance variable 30 en fonction de la température. Cette résistance variable 30 est connectée électriquement par une de ses bornes au point de deuxième potentiel du deuxième circuit électrique 14 et par l'autre de ses bornes à la deuxième masse GND2 du deuxième circuit 14. En d'autres termes, la résistance variable 30 est connectée entre l'élément capacitif 20 et la deuxième masse GND2 du deuxième circuit 14.

Dans l'exemple décrit ici, la résistance variable 30 est une thermistance CTN (Coefficient de Température Négatif) dont la résistance R30 diminue quand la température augmente et vice-versa.

En variante, la résistance variable 30 peut être une thermistance CTP (Coefficient de Température positif) dont la résistance augmente quand la température augmente et vice-versa.

Avantageusement, le système électrique 10 selon l'invention comporte en outre un dispositif 40 de mesure de température. Le dispositif 40 de mesure de température comprend un générateur de tension 42, un dispositif d'acquisition 44 et une résistance 46 de valeur R46. La résistance 46 a une première borne électrique C connectée à une borne du générateur de tension 42 et une seconde borne électrique D connectée au point A de premier potentiel du premier circuit électrique 12.

De préférence, le générateur de tension 42 est configuré pour émettre un signal périodique sur la première borne C de la résistance 46.

Dans l'exemple décrit ici, le signal périodique émis sur la première borne C de la résistance 46 est une tension périodique.

De préférence, le générateur de tension 42 est configuré pour émettre un signal carré de période T0 tel qu'illustré sur la figure 2, permettant ainsi de simplifier la forme des signaux à traiter.

De préférence, le dispositif d'acquisition 44 est configuré pour échantillonner un signal analogique à la deuxième borne D de la résistance 46 connectée au point A de premier potentiel du premier circuit électrique 12. Par exemple, le signal analogique à la deuxième borne D correspond au potentiel, i.e. la tension, présent à ce point D.

De façon préférentielle, le dispositif d'acquisition 44 est configuré pour échantillonner le signal analogique à la deuxième borne D de la résistance 46 avec une fréquence d'échantillonnage T1 égale à la moitié de la période T0 du signal émis par le générateur de tension 42 lorsque ce signal émis est périodique.

De façon préférentielle, le générateur de tension 42 est réalisé en mettant en série un port d'entrée/sortie générale GPIO (de l'anglais « General Purpose Input/Output) d'un microcontrôleur µC et un amplificateur séparateur 48 (en anglais « buffer stage »), le port GPIO étant configuré en port de sortie sur lequel est émis un signal numérique binaire amplifié par l'amplificateur séparateur 48. En d'autres termes, la tension présente à la sortie de l'amplificateur séparateur 48 évolue suivant un signal périodique carré de période T0. L'amplificateur séparateur 48 permet en outre d'éviter que d'éventuelles fluctuation de charge au niveau de la première borne électrique C perturbe la fréquence du signal émis par le port GPIO du microcontrôleur µC.

De façon préférentielle, le dispositif d'acquisition 44 est réalisé par un convertisseur analogique numérique. Dans l'exemple décrit ici, le convertisseur analogique numérique est intégré au microprocesseur µC et est accessible par une entrée dite A/D ou ADC (en anglais « Analog to Digital Converter).

Dans l'exemple décrit sur les figures et de façon non limitative, le signal binaire numérique émis par le port GPIO a une amplitude de 3,3V pour le niveau haut et de 0V pour le niveau bas tandis que le signal périodique carré en sortie de l'amplificateur séparateur 48 à une amplitude variant entre 0 et 5V.

Lorsque le système électrique 10 est en fonctionnement, la première masse du premier circuit électrique 12 est connectée électriquement à la deuxième masse du deuxième circuit électrique 14, de préférence uniquement par un câble électrique.

De façon préférentielle, l'impédance de connexion Z entre la première et la deuxième masse lorsque le générateur de tension 42 émet le signal périodique sur la première borne C de la résistance 46 est négligeable par rapport à l'impédance R30 de la résistance variable 30 et à l'impédance R46 de la résistante 46.

Ainsi, lorsque le système électrique 10 est en fonctionnement, l'invention présente l'avantage par rapport à l'utilisation d'un transformateur de n'utiliser qu'un seul fil pour réaliser la liaison électrique entre la résistance variable 30 et le dispositif d'acquisition 44, la boucle de masse s'effectuant par la liaison précédemment décrite entre la première masse du premier circuit électrique 12 et la deuxième masse du deuxième circuit électrique 14.

Avantageusement, le générateur de tension 42 est configuré pour émettre un signal ayant un rapport cyclique supérieur ou égal à 40 % et inférieur ou égal à 60 %, de préférence sensiblement égal à 50 %. Ainsi, la mesure de température peut être déduite de la mesure entre l'état haut et l'état bas du signal analogique, i.e. le potentiel ou tension présent au point D, acquis par le dispositif d'acquisition 44 en référence à la figure 2.

De façon préférentielle, le circuit RC constitué par l'élément capacitif 20, la résistance variable 30 et la résistance 46 à une constante de temps (produit de la valeur de la capacité 20 par la somme des résistances 30 et 46) très supérieure à la demi période du signal carré émis par le générateur de tension 42, c'est-à-dire dans l'exemple décrit émis à la sortie de l'amplificateur séparateur 48.

Dans ces conditions, le circuit RC se comporte comme un circuit RC intégrateur. En régime permanent, l'élément capacitif 20 présente une tension constante à ses bornes et égale à la valeur moyenne V_{moy} du signal émis par le générateur de tension 42.

A titre d'exemple, la figure 2 représente la forme des signaux considérés lorsque le dispositif 40 de mesure de température est tel que décrit à la figure 1 et que le générateur de tension 42 émet un signal périodique carré de période To=0.2 ms pour les valeurs suivantes des éléments constitutifs du circuit RC :
- R_{30 =} 10kΩ pour une température de 25°C,
- R_{46 ==} 10kΩ, et
- C₂₀ = 1 µF.

Dans l'exemple illustré à la figure 2 le signal périodique carré en sortie du générateur de tension 42 a une amplitude variant entre 0 et 5V.

La figure 2 représente également la tension correspondante présente au point A de premier potentiel du premier circuit électrique 12.

La constante de temps tau du circuit RC est de 0.02s et est très supérieure à la période T₀ de 0.2ms du signal excitant ce circuit RC. Par ailleurs, la valeur moyenne de la tension présente au point C est de V_{moy} = 2,5V.

En régime permanent, les résistances 30 et 46 réalisent un pont diviseur de tension.

En outre, dans l'exemple décrit à la figure 2, le dispositif d'acquisition 44 est configuré pour échantillonner le signal analogique au point A avec une période d'échantillonnage T₁ égale à la moitié de la période T₀ du signal émis par le générateur de tension 42. Ainsi, le dispositif d'échantillonnage 44 acquière des échantillons Eₘₐₓ et Eₘᵢₙ ayant respectivement les valeurs Vₘₐₓ et V_{min.}

Par ailleurs, la différence de potentielle Vₘₐₓ-Vₘᵢₙ est fonction de la valeur R30 de la résistance variable 30, cette valeur étant elle-même fonction de la température environnant la résistance variable 30.

Par conséquent, la différence de potentielle Vₘₐₓ-Vₘᵢₙ dépend de la température environnant la résistance variable 30, cette relation pouvant être explicitée dans une table de correspondance comportant deux colonnes. La première colonne liste les valeurs possibles de Vₘₐₓ-Vₘᵢₙ et la deuxième colonne la température environnant la résistance variable 30 qui correspond aux valeurs de Vₘₐₓ-Vₘᵢₙ listées dans la première colonne.

Ainsi, dans cet exemple, le microcontrôleur µC du dispositif 40 de mesure de température reçoit sur son entrée A/D successivement les échantillons Eₘₐₓ et Eₘᵢₙ, en réalise la différence et calcule la température environnant la résistance 30 en utilisant la table de correspondance.

Dans l'exemple décrit précédemment, le microcontrôleur µC utilise la différence Eₘₐₓ-Eₘᵢₘ pour déterminer la température environnant la résistance 30. En variante, le microcontrôleur µC peut déterminer la température environnant la résistance 30 en utilisant seulement les échantillons Eₘₐₓ ou seulement les échantillons Eₘᵢₙ.

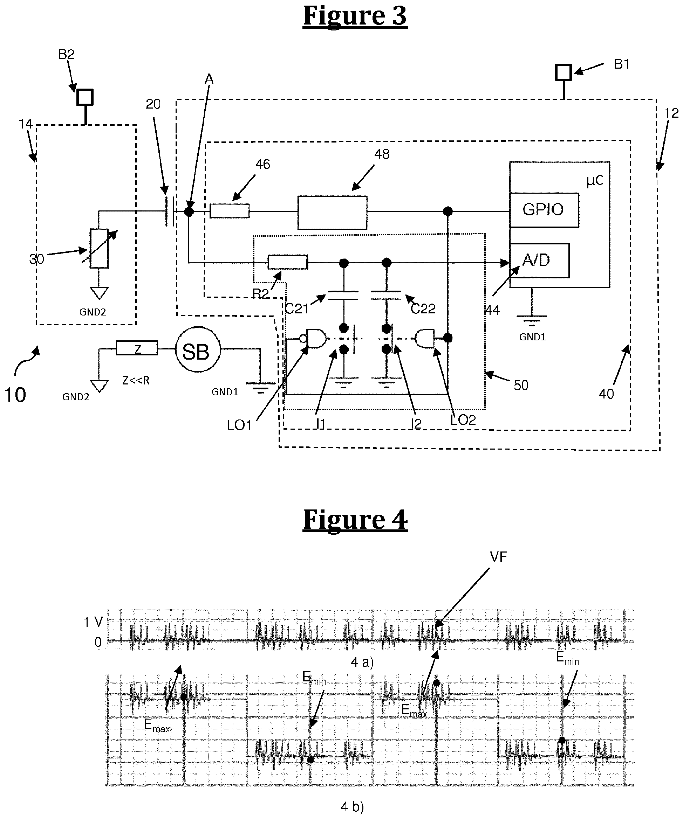

Selon un second mode de réalisation illustré sur la figure 3, le système électrique 10 comporte en outre un dispositif de filtrage 50 arrangé et configuré pour filtrer le signal analogique présent au point A avant échantillonnage par le dispositif d'acquisition 44.

Dans l'exemple décrit ici, le signal analogique présent au point A est le potentiel électrique, i.e. la tension, par rapport à la première masse GND1.

Le temps d'échantillonnage du dispositif d'acquisition 44 étant en général de l'ordre de quelques microsecondes, le moment de la mesure dans le motif carré a une forte influence sur la précision de la mesure en présence de bruit à hautes fréquences. Ce bruit peut être généré par exemple par les commutations de puissance du système électrique.

Comme illustrée à la figure 4a, ce bruit se matérialise comme une tension fluctuante VF présente entre la première masse GND1 et la deuxième masse GND2 et peut être modélisé comme une source de tension SB présente entre la première masse GND1 et la deuxième masse GND2. Ce bruit ajoute au signal carré des pics de forte amplitude (voir figure 4b), avec parfois des occurrences cycliques synchrones. Bien que le bruit est une moyenne nulle, si le motif temporel du bruit de commutation est synchronisé avec le moment de l'acquisition des échantillons Emax et ou Emin, le dispositif 40 de mesure de température déterminera avec un biais la température environnant la résistance 30.

En outre, le motif temporel du bruit n'étant pas symétrique, le biais engendré sur les échantillons Emax et Emin ne sera pas identique.

Ces caractéristiques du bruit font qu'il est difficile d'obtenir une valeur moyennée nulle du bruit par simple filtrage successif des échantillons Emax et Emin.

Le dispositif de filtrage 50 représenté sur la figure 3 comporte :
- une résistance R2 connectée entre le point A de premier potentiel du premier circuit électrique 12 et la borne d'entrée A/D du dispositif d'acquisition 44,
- une première capacité de filtrage C21 et un premier interrupteur I1 connectées en série, l'association en série de la première capacité de filtrage C21 et du premier interrupteur I1 étant placée en parallèle entre la borne d'entrée dite A/D du dispositif d'acquisition 44 et la première masse GND1,
- une deuxième capacité de filtrage C22 et un deuxième interrupteur I2 connectées en série, l'association en série de la deuxième capacité de filtrage C22 et du deuxième interrupteur I2 étant placée en parallèle entre la borne d'entrée dite A/D du dispositif d'acquisition 44 et la première masse GND1.

En outre, l'état ouvert ou fermé des premier et deuxième interrupteurs est commandé par le signal carré émis par le générateur de tension 42, le premier interrupteur I1 étant ouvert lorsque le deuxième interrupteur I2 est fermé, et vice-versa.

Cette synchronisation de la fermeture et de l'ouverture des interrupteurs I1 et I2 par rapport au signal carré émis par le générateur de tension 42 est réalisée respectivement par deux portes logiques permettant de commander les interrupteurs I1 et I2.

La première porte logique LO1 est une porte logique inverseuse qui inverse le signal émis par le générateur de tension. La deuxième porte logique LO2 est une porte logique à une entrée et une sortie, cette porte logique LO2 recopiant sur sa sortie le signal disponible sur son entrée. Ainsi, dans l'exemple décrit ici, le premier interrupteur est ouvert tandis que le deuxième interrupteur est fermé lorsque le signal carré émis par le générateur de tension 42 prend sa valeur maximale,.

Les interrupteurs I1 et I2 peuvent par exemple être des transistors, par exemple des transistors MOSFET ou des transistors bipolaire qui sont commandés par l'intermédiaire du signal émis par le générateur de tension 42 au travers des portes logiques LO1 et LO2.

Dans ces conditions, les deux circuits RC se comportent comme deux circuits RC dit intégrateur qui filtrent alternativement en fonction du signal émis par le générateur de tension 42 le potentiel présent au point A avant échantillonnage par le dispositif d'acquisition 44.

Ainsi, en régime permanent, la capacité C21 se charge à la tension Vmin tandis que la capacité C22 se charge à la tension Vmax.

En d'autres termes, lorsque le signal binaire numérique binaire émis sur le port de sortie GPIO du microcontrôleur µC prend une valeur haute alors l'interrupteur I2 est fermé tandis que l'interrupteur I1 est ouvert et le dispositif d'acquisition 44 échantillonne le potentiel présent aux bornes de la capacité C22.

De même, lorsque le signal binaire numérique binaire émis sur le port de sortie GPIO du microcontrôleur µC prend une valeur basse alors l'interrupteur I2 est ouvert tandis que l'interrupteur I1 est fermé et le dispositif d'acquisition 44 échantillonne le potentiel présent aux bornes de la capacité C21.

A titre d'exemple, les valeurs suivantes peuvent être utilisées pour réaliser le dispositif de filtrage 50 représenté sur la figure 3
- C21 = C22 = 1 µF, et
- R2 = 10 kΩ.

Le circuit RC constitué par l'élément capacitif C21 et la résistance R2 à une constante de temps (produit de la valeur de la capacité 21 par la valeur de la résistance R2) supérieure ou égale à 10ms et une fréquence de coupure inférieure ou égale à 100Hz.

Le circuit RC constitué par l'élément de filtrage C22 et la résistance R2 possède par ailleurs la même constance de temps et la même fréquence de coupure que le circuit RC constitué par l'élément de filtrage C21 et la résistance R2.

Ainsi, le dispositif de filtrage 50 est configuré pour avoir une fréquence de coupure très inférieure à la fréquence critique de filtrage et une constante de temps très élevées pour obtenir une intégration du bruit suffisante, la fréquence critique de filtrage étant 10kHz.

Ainsi, il est possible d'obtenir des valeurs filtrées à des fréquences très basses correspondant à l'état haut et à l'état bas du signal acquis par le dispositif d'acquisition 44 en ayant des niveaux d'atténuation du bruit très élevés.

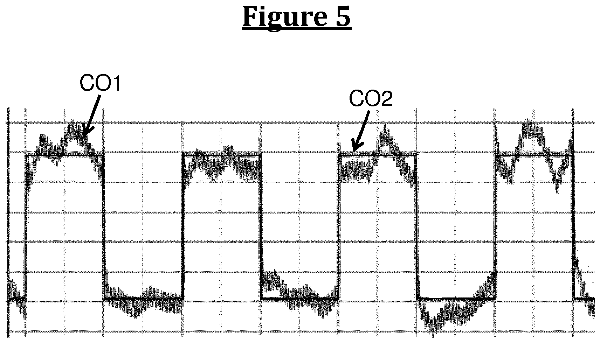

La figure 5 illustre l'avantage de l'utilisation d'un dispositif de filtrage 50 du bruit.

La courbe CO1 illustre la tension présente au point A de premier potentiel du premier circuit électrique 12. Cette courbe est très fortement bruitée par le bruit existant entre la première masse GND1 et la deuxième masse GND2.

La courbe CO2 illustre la tension vue du dispositif d'acquisition 44.

Ces deux courbes illustrent que la réjection du dispositif de filtrage face aux bruits présent entre la première masse GND1 et la deuxième masse GND2 est un filtrage basse fréquence, chaque portion Vmax et Vmin étant indépendamment filtrée.

De façon avantageuse, l'acquisition des échantillons Emax et ou Emin peut être réalisée à n'importe quelle moment des demi-périodes T0/2 successives correspondant respectivement à l'état haut et à l'état bas du signal émis par le générateur de tension 42.

## Revendications

1. Système électrique (10) notamment pour véhicule automobile, comprenant :
- un premier circuit électrique (12) ayant une première masse (GND1) et alimenté par une première tension (V1) au niveau d'une première borne d'alimentation (B1),
- un deuxième circuit électrique (14) ayant une deuxième masse (GND2) distincte de la première masse (GND1) et alimenté par une deuxième tension (V2) différente de la première tension (V1) au niveau d'une deuxième borne d'alimentation (B2),
- un élément capacitif (20) reliant un point (A) de premier potentiel du premier circuit électrique (12) à un point (B) de deuxième potentiel du deuxième circuit électrique (14).

2. Système électrique selon la revendication 1, dans lequel la deuxième tension (V2) est supérieure ou égale à la première tension (V1), préférentiellement la première tension (V1) est comprise entre 3V et 40V et la deuxième tension (V2) est comprise entre 20V et 70V.

3. Système électrique selon l'une des revendications précédentes dans lequel l'élément capacitif (20) à une capacité comprise entre 1 et 4,7 µF.

4. Système électrique selon l'une des revendications précédentes comprenant en outre une résistance variable (30) en fonction de la température, ladite résistance variable (30) étant placée en série entre l'élément capacitif (20) et la deuxième masse (GND2).

5. Système électrique selon la revendication 4, comprenant en outre un dispositif (40) de mesure de température, le dispositif (40) de mesure de température comprenant :
un générateur de tension (42), un dispositif d'acquisition (44), une unité de calcul (µC) et une première résistante (46) ayant une première borne électrique (C) connectée à une borne du générateur de tension (42) et une seconde borne électrique (D) connectée au point (A) de premier potentiel du premier circuit électrique (12), dans lequel :
- le générateur de tension (42) est configuré pour émettre un signal périodique sur la première borne (C) de la première résistance (46),
- le dispositif d'acquisition (44) est configuré pour échantillonner périodiquement le potentiel présent sur une borne d'entrée (A/D), ladite borne d'entrée étant connectée au point (A) de premier potentiel du premier circuit électrique (12), et
- l'unité de calcul (µC) est configurée pour estimer la température à partir des échantillons acquis par le dispositif d'acquisition (44).

6. Système électrique selon la revendication 5, dans lequel lorsque le système électrique (10) est en fonctionnement, la première masse (GND1) du premier circuit électrique (12) est connectée électriquement à la deuxième masse (GND2) du deuxième circuit électrique (14), de préférence uniquement par un câble électrique.

7. Système électrique selon la revendication 5 ou 6, dans lequel le générateur de tension (42) est configuré pour émettre un signal carré.

8. Système électrique selon l'une des revendications 5 à 7, dans lequel le générateur de tension (42) est configuré pour émettre un signal ayant un rapport cyclique supérieur ou égal à 40% et inférieur ou égal à 60%.

9. Système électrique selon la revendication 8 prise ensemble avec la revendication 7 ou selon la revendication 7, dans lequel le dispositif de mesure de température (40) comprend en outre un dispositif de filtrage (50) arrangé et configuré pour filtrer le potentiel présent au point (A) de premier potentiel du premier circuit électrique (12) avant son échantillonnage par le dispositif d'acquisition (44), ledit dispositif de filtrage comprenant :
- une deuxième résistance (R2) connectée entre le point (A) de premier potentiel du premier circuit électrique (12) et la borne d'entrée (A/D) du dispositif d'acquisition (44),
- une première capacité de filtrage (C21) et un premier interrupteur (I1) connectées en série, l'association en série desdites première capacité de filtrage (C21) et premier interrupteur (I1) étant placée en parallèle entre la borne d'entrée (A/D) du dispositif d'acquisition (44) et la première masse (GND1),
- une deuxième capacité de filtrage (C22) et un deuxième interrupteur (I2) connectées en série, l'association en série desdites deuxième capacité de filtrage (C22) et deuxième interrupteur (I2) étant placée en parallèle entre la borne d'entrée (A/D) du dispositif d'acquisition (44) et la première masse (GND1),
- l'état ouvert ou fermé desdits premier et deuxième interrupteurs étant commandé par le signal carré émis par le générateur de tension (42), le premier interrupteur étant ouvert lorsque le deuxième interrupteur est fermé, et vice-versa.

## Patentansprüche

1. Elektrisches System (10) insbesondere für ein Kraftfahrzeug, umfassend:
- eine erste elektrische Schaltung (12), die eine erste Masse (GND1) hat und mit einer ersten Spannung (V1) an einem ersten Versorgungsanschluss (B1) versorgt wird,
- eine zweite elektrische Schaltung (14), die eine zweite Masse (GND2) hat, die von der ersten Masse (GND1) verschieden ist, und mit einer zweiten Spannung (V2), die von der ersten Spannung (V1) verschieden ist, an einem zweiten Versorgungsanschluss (B2) versorgt wird,
- ein kapazitives Elemente (20), das einen Punkt (A) mit einem ersten Potential der ersten elektrischen Schaltung (12) mit einem Punkt (B) mit einem zweiten Potential der zweiten elektrischen Schaltung (14) verbindet.

2. Elektrisches System nach Anspruch 1, bei dem die zweite Spannung (V2) größer oder gleich der ersten Spannung (V1) ist, bevorzugt die erste Spannung (V1) zwischen 3 V und 40 V beträgt und die zweite Spannung (V2) zwischen 20 V und 70 V beträgt.

3. Elektrisches System nach einem der vorhergehenden Ansprüche, bei dem das kapazitive Element (20) eine Kapazität zwischen 1 und 4,7 µF hat.

4. Elektrisches System nach einem der vorhergehenden Ansprüche, umfassend ferner einen in Abhängigkeit von der Temperatur variablen Widerstand (30), wobei der variable Widerstand (30) in Reihe zwischen dem kapazitiven Element (20) und der zweiten Masse (GND2) angeordnet ist.

5. Elektrisches System nach Anspruch 4, umfassend ferner eine Temperaturmessvorrichtung (40), wobei die Temperaturmessvorrichtung (40) umfasst: einen Spannungsgenerator (42), eine Erfassungsvorrichtung (44), eine Recheneinheit (µC) und einen ersten Widerstand (46), der einen ersten elektrischen Anschluss (C) hat, der an einen Anschluss des Spannungsgenerators (42) geschaltet ist, und einen zweiten elektrischen Anschluss (D), der an den Punkt (A) mit dem ersten Potential der ersten elektrischen Schaltung (12) geschaltet ist, bei dem:
- der Spannungsgenerator (42) dazu ausgestaltet ist, ein periodisches Signal über den ersten Anschluss (C) des ersten Widerstands (46) auszugeben,
- die Erfassungsvorrichtung (44) dazu ausgestaltet ist, das an einem Eingangsanschluss (ND) anliegende Potential periodisch abzutasten, wobei der Eingangsanschluss an den Punkt (A) mit dem ersten Potential der ersten elektrischen Schaltung (12) geschaltet ist, und
- die Recheneinheit (µC) dazu ausgestaltet ist, die Temperatur anhand der von der Erfassungsvorrichtung (44) erfassten Abtastungen zu schätzen.

6. Elektrisches System nach Anspruch 5, bei dem, wenn das elektrische System (10) in Betrieb ist, die erste Masse (GND1) der ersten elektrischen Schaltung (12) elektrisch an die zweite Masse (GND2) der zweiten elektrischen Schaltung (14) geschaltet ist, bevorzugt nur mit einem Stromkabel.

7. Elektrisches System nach Anspruch 5 oder 6, bei dem der Spannungsgenerator (42) dazu ausgestaltet ist, ein Rechtecksignal auszugeben.

8. Elektrisches System nach einem der Ansprüche 5 bis 7, bei dem der Spannungsgenerator (42) dazu ausgestaltet ist, ein Signal auszugeben, das einen Tastgrad größer oder gleich 40 % und kleiner oder gleich 60 % hat.

9. Elektrisches System nach Anspruch 8 in Kombination mit Anspruch 7 oder nach Anspruch 7, bei dem die Temperaturmessvorrichtung (40) ferner eine Filtervorrichtung (50) umfasst, die dazu eingerichtet und ausgestaltet ist, das am Punkt (A) mit dem ersten Potential der ersten elektrischen Schaltung (12) anliegende Potential vor seiner Abtastung durch die Erfassungsvorrichtung (44) zu filtern, wobei die Filtervorrichtung umfasst:
- einen zweiten Widerstand (R2), der zwischen den Punkt (A) mit dem ersten Potential der ersten elektrischen Schaltung (12) und den Eingangsanschluss (ND) der Erfassungsvorrichtung (44) geschaltet ist,
- eine erste Filterkapazität (C21) und einen ersten Schalter (I1), die in Reihe geschaltet sind, wobei die Reihenkombination aus der ersten Filterkapazität (C21) und dem ersten Schalter (I1) parallel zwischen dem Eingangsanschluss (ND) der Erfassungsvorrichtung (44) und der ersten Masse (GND1) angeordnet ist,
- eine zweite Filterkapazität (C22) und einen zweiten Schalter (I2), die in Reihe geschaltet sind, wobei die Reihenkombination aus der zweiten Filterkapazität (C22) und dem zweiten Schalter (I2) parallel zwischen dem Eingangsanschluss (ND) der Erfassungsvorrichtung (44) und der ersten Masse (GND1) angeordnet ist,
- wobei der geöffnete oder geschlossene Zustand der ersten und zweiten Schalter durch das vom Spannungsgenerator (42) ausgegebene Rechtecksignal gesteuert wird, wobei der erste Schalter geöffnet ist, wenn der zweite Schalter geschlossen ist, und umgekehrt.

## Claims

1. Electrical system (10), in particular for a motor vehicle, comprising:
- a first electrical circuit (12) having a first ground (GND1) and supplied with a first voltage (V1) at a first supply terminal (B1),
- a second electrical circuit (14) having a second ground (GND2), distinct from the first ground (GND1), and supplied with a second voltage (V2), different from the first voltage (V1), at a second supply terminal (B2),
- a capacitive element (20) connecting a first potential point (A) of the first electrical circuit (12) to a second potential point (B) of the second electrical circuit (14).

2. Electrical system according to Claim 1, wherein the second voltage (V2) is greater than or equal to the first voltage (V1), preferably the first voltage (V1) is between 3 V and 40 V and the second voltage (V2) is between 20 V and 70 V.

3. Electrical system according to either of the preceding claims, wherein the capacitive element (20) has a capacitance between 1 and 4.7 µF

4. Electrical system according to one of the preceding claims, furthermore comprising a variable resistor (30) with a resistance that varies as a function of temperature, said variable resistor (30) being placed in series between the capacitive element (20) and the second ground (GND2).

5. Electrical system according to Claim 4, furthermore comprising a temperature measurement device (40), the temperature measurement device (40) comprising: a voltage generator (42), an acquisition device (44), a computing unit (µC) and a first resistor (46) having a first electrical terminal (C) connected to a terminal of the voltage generator (42) and a second electrical terminal (D) connected to the first potential point (A) of the first electrical circuit (12), wherein:
- the voltage generator (42) is configured so as to emit a periodic signal on the first terminal (C) of the first resistor (46),
- the acquisition device (44) is configured so as to periodically sample the potential present on an input terminal (A/D), said input terminal being connected to the first potential point (A) of the first electrical circuit (12), and
- the computing unit (µC) is configured so as to estimate the temperature from the samples acquired by the acquisition device (44).

6. Electrical system according to Claim 5, wherein, when the electrical system (10) is operating, the first ground (GND1) of the first electrical circuit (12) is electrically connected to the second ground (GND2) of the second electrical circuit (14), preferably only by an electric cable.

7. Electrical system according to Claim 5 or 6, wherein the voltage generator (42) is configured so as to emit a square-wave signal.

8. Electrical system according to one of Claims 5 to 7, wherein the voltage generator (42) is configured so as to emit a signal having a duty cycle greater than or equal to 40% and less than or equal to 60%.

9. Electrical system according to Claim 8 taken together with Claim 7 or according to Claim 7, wherein the temperature measurement device (40) furthermore comprises a filtering device (50) arranged and configured so as to filter the potential present at the first potential point (A) of the first electrical circuit (12) before it is sampled by the acquisition device (44), said filtering device comprising:
- a second resistor (R2) connected between the first potential point (A) of the first electrical circuit (12) and the input terminal (A/D) of the acquisition device (44),
- a first filtering capacitor (C21) and a first switch (I1) connected in series, the series combination of said first filtering capacitor (C21) and first switch (I1) being placed in parallel between the input terminal (A/D) of the acquisition device (44) and the first ground (GND1),
- a second filtering capacitor (C22) and a second switch (12) connected in series, the series combination of said second filtering capacitor (C22) and second switch (12) being placed in parallel between the input terminal (A/D) of the acquisition device (44) and the first ground (GND1),
- the open or closed state of said first and second switches being controlled by the square-wave signal emitted by the voltage generator (42), the first switch being open when the second switch is closed, and vice versa.
